# EUROPEAN PATENT SPECIFICATION

(11) **EP 2 930 208 B1**
(45) Date of publication and mention of the grant of the patent: **01.11.2017**
(21) Application number: 12889456.5
(22) Date of filing: 04.12.2012
(51) Int. Cl.: C08L 23/12, C08L 23/26, C08F 255/02, C08J 7/16

(54) **METHOD OF COMPATIBILIZATION OF POLYPROPYLENE BLENDS, POLYPROPYLENE BLEND AND USE THEREOF, PRODUCT AND COMPATIBILIZING INITIATING AGENT OF A BLEND POLYPROPYLENE**
VERFAHREN ZUR POLYPROPYLENMISCHUNGSKOMPATIBILISIERUNG, POLYPROPYLENMISCHUNG UND VERWENDUNG DAVON, POLYPROPYLENMISCHPRODUKT UND KOMPATIBILISIERUNGSINITIATOR
PROCÉDÉ DE COMPATIBILISATION DE MÉLANGES DE POLYPROPYLÈNE, MÉLANGE DE POLYPROPYLÈNE ET SON UTILISATION, PRODUIT ET AGENT INITIATEUR DE COMPATIBILISATION DE MÉLANGE DE POLYPROPYLÈNE

(43) Date of publication of application: 14.10.2015
(73) Proprietor: Braskem S.A., 42810-000 Camaçari, BA (BR)
(72) Inventor: FARAH, Marcelo, 91900-400 Porto Alegre - RS (BR); DE AZEREDO, Ana, Paula, 93224-020 Sapucaia do Sul - RS (BR); QUENTAL, Antonio, Carlos, 91130-470 Porto Alegre- RS (BR)
(74) Representative: Eisenführ Speiser
(86) International application number: PCT/BR2012/000492
(87) International publication number: WO 2014/085878

(56) References cited:
- BR-A- 9 706 504
- BR-A- 9 814 228
- BR-A- PI0 516 053
- BR-A2- PI0 804 498
- US-A- 5 807 930
- US-A1- 2012 208 037
- R HETTEMA ET AL.: 'In-Situ Reactive Blending of Polyethylene and Polypropylene in Co-Rotating and Counter-Rotating Extruders' POLYMER ENGINEERING AND SCIENCE vol. 39, no. 9, September 1999, pages 1628 - 1641, XP000950272 DOI: 10.1002/PEN.11557
- SIRIN, K. ET AL.: 'Mechanical properties and thermal analysis of low-density polyethylene + polypropylene blends with dialkyl peroxide' POLYM. ADV. TECHNOL. vol. 21, 2010, pages 250 - 255, XP055265910
- KREY, P. F.: 'OBTENçàO DE POLIPROPILENO MODIFICADO COM METACRILATO DE GLICIDILA E ANIDRIDO MALEICO E SUA APLICAçãO NA COMPATIBILIZAçãO DE BLENDAS DE POLIPROPILENO/POLI(TEREFTALATO DE ETILENO)' DISSERTAÇÀO DE MESTRADO 2002, PORTO ALEGRE, pages 4 - 32, 36-38, 46-63, XP055263941

## Description

### Field of the invention

The present invention relates to a method of compatibilization of polypropylene blends, wherein a compatilizer is generated *in situ.*

More specifically, the present invention comprises a mixture of a polypropylene with a polymer, in the presence of a compatibilization initiating agent which in turn causes greater compatibility between the phases, in order to obtain a product having improved mechanical properties.

### Background of the invention

Polypropylene (PP) is one of the most widely used polymer materials, primarily for its great processing versatility (injection molding) and balanced properties. One can work with rigid PP (random homopolymers and copolymers) and with highly impact-resistant materials (heterophasic copolymers), depending on the production steps and comonomer levels (ethylene, butene, etc.) added during synthesis of the product.

PP blends with other polyolefins, polyamides and polyesters are very common due to their interesting properties, such as low density, chemical resistance and ease of molding. Among these blends are high-impact PP, which can be prepared through PP extrusion with elastomers, such as ethylene-propylene-diene rubber (EPDM), thermoplastic ethylene-butene-styrene rubber (SEBS), thermoplastic butene-styrene rubber (SBS), etc., or through polymerization (*in situ* EPR (ethene-propylene rubber) blends), for example).

It is known that there is a large influence of the dispersed phase (dispersion, chemical composition and amount) on the final properties of the products. In general, it is expected that the second phase is very short and well dispersed, increasing the contact area between the phases and enhancing synergy of the system, which indicates compatibility thereof. As a general rule, the more compatible the phases, the smaller the generated particle size, the better the dispersion and the greater the synergy of properties.

The use of compatibilizers is a very frequently used approach in polymer blends. The compatibilizer provides greater chemical affinity between the components, reducing the interfacial tension, enabling the formation and maintenance of a greater dispersion (which means a smaller size of the second phase). Traditional compatibilizers can be added in the extrusion processes of the blends to be thermodynamically located at the phase interface, being usually polymers grafted with polar groups or synthesized with sequences that are more compatible with the matrix, or sequences from the polymer thereof. In the case of heterophasic PP copolymers, in spite of the high compatibility between the PP matrix and the EPR phase, there are no chemical bonds between the phases, so compatibility is limited to the composition of the rubber itself and the matrix.

In polymeric blends, processing causes the morphology to be changed and phase dispersion takes place in accordance with their rheological and physical-chemical properties. However, as a result of processing (heating, shearing, for example) a phenomenon designated coalescence can take place, whereby one of the phases (made of rubber or another component) tends to coalesce, that is, it tends to form larger particles and even agglomerates. Such coalescence phenomenon accounts for several changes in the properties of a mixture of two or more polymers, depending on the equipment used and on the processing conditions, which greatly prejudices the development of new resins, in accordance with the coherent property requirements.

Another disadvantage is that the reprocessing and reuse effect of scraps and parts by recycling is prejudiced by the morphological change of the phases, limiting the use to small fractions to maintain the properties of the initial product. In the case of PP heterophasic copolymer, there is a limitation in the molecular weights of the phases so as to prevent favoring coalescence.

The presence of compatibilizers causes a lower power interface to be formed, enabling a greater synergy and the preparation of products having better properties. However, the production of compatibilizers is usually demanding and adds cost to the final product. Due to its aggregate value and simplicity, the reactive extrusion pathway for *in situ* compatibilization has been widely used because of its versatility and the control over the final product in a single process.

PP, however, imposes a great difficulty in the production of compatibilizers by grafting comonomers to its chain, since reaction initiators causes PP to degrade at the processing temperatures, which, in turn, tends to recombine in the beta shape forming vinyl bonds, significantly reducing the molar mass. Grafting reactions involving polypropylene require large amounts of initiator, and usually low molecular weight products are obtained, which limits both the final applications and performance. Said mechanism is shown in the scheme below:

### Crosslinking/ Grafting

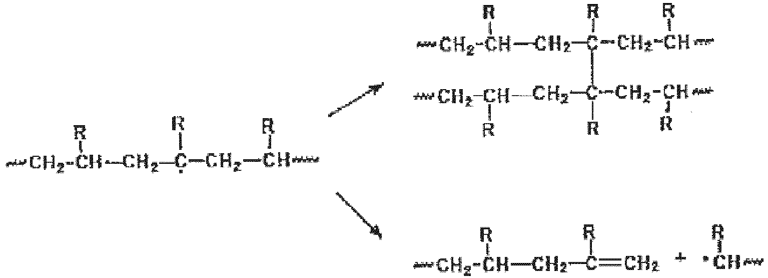

### β scission

Thereby, there only remains the production of compatibilizers in separate processes, to be added to the system in the feed, which compatibilizers are commonly based on PP grafted with maleic anhydride or acrylic acid, or synthesized block or random copolymers with different comonomers.

### Description of the state of the art

Several documents refer to the possibility of prioritizing crosslinking between PP chains to obtain branched-chain PPs, acquiring good properties in elongational flows.

Patent document EP 384431 B1 discloses the production of PP and copolymers thereof, branched from the use of low half-life peroxide at temperatures of up to 120 ° C with half-lifes of 10 seconds to 5 minutes. The mixture of polymer and peroxide must be kept at 120 °C for complete reaction, peroxide deactivation, in the absence of oxygen. On the other hand, said document does not address the compatibilization of phases between blends of the powder or reactor-mixed PP, therefore, differing from the main object of the present invention.

Patent document WO 97/49759 discloses the production of branched PP and copolymers thereof by using peroxides in an aqueous or polar solvent dispersion directly in the PP, at temperatures below the peroxide decomposition and in a polar medium. Said document does not disclose the possibility of producing compatibilizers *in situ* by reactive extrusion, being therefore different from the technology disclosed herein.

Patent document WO 99/27007 describes the production of high melt strength PP by directly adding solid peroxides to the PP, wherein the peroxides are from the peroxydicarbonate family and extruded in order to produce branched PP. *In situ* compatibilization of PP blends is not addressed in the international application, which is therefore different from the object of the present invention.

Patent document US 05416169 describes the production of branched PP and copolymers thereof by using di-2-ethylhexyl peroxide dicarbonate mixed in a reactor in the solid state, with mixing times of from 10 minutes to 3 hours at between 70° and 150 ° C. The process is slow and is not intended to compatibilize the phases of blends or copolymers by reactive extrusion, which is object of the present invention.

Patent document WO 00/000520 A1 discloses foamable products of PP and PP copolymers being processed in the presence of organic peroxides, wherein the total resistance time of the polymer within the matrix must be greater than three times the half-life of the peroxide at the processing temperature. Said document describes that a coupling agent can be used to facilitate the formation of branches. The process of producing the branched resin and the foaming take place at the same extrusion, but do not encompass the process of compatibilization between the system phases.

Patent document EP 0890612 describes the production of PP with greater temperature strength and improved mechanical properties by inserting ethylenically modified comonomers into copolymers and homopolymers. In the present invention, the use of other comonomers is unnecessary, and the European document does not disclose any methods of compatibilization of PP blends.

Patent document US 6469087 describes the stabilization of blends comprising two components having very different viscosities by adding mineral fillers for compatibility. On the other hand, the compatibilization of blends as disclosed herein is a result of reactive extrusion applied on the blends.

Patent document WO 03029345 describes the production of foams from high melt strength PP for coating cables and insulation, by means of peroxides which react at temperatures of between 60 and 90°C. Document EP 1174261, in turn, discloses the same technology for multi-layered tubes for use in high compression applications using PP and copolymers thereof. As described above, the present invention does not require the use of comonomers.

Patent document US 2003/0208007 describes the production of PP copolymers by using peroxides having longer half-life, allowing a good dispersion thereof in the matrix and reacting at higher temperatures. The achieved property is the improved mechanical strength at room temperature, wherein, in the present invention, an improvement at lower temperatures is also contemplated by the *in situ* compatibilization of the reactor copolymers via reactive extrusion.

Patent document US 2005/0054781 discloses the production of high impact copolymers in a reactor, by using comonomers having four carbon atoms or more, based on the composition thereof and the synthesis conditions. The present invention is intended to improve the properties of polyolefin blends without the need for altering the established products and compositions, as it is a reactive extrusion process. Moreover, formation of compatibilizers during the process is not addressed by the American document.

Patent document US 2005/0163949 describes the production of controlled rheology PP copolymers, through the use of peroxides having half-lives greater than 1 second, greater than 225 °C, namely, peroxide with cyclic ketones. The method described in the American document relates to how to degrade heterophasic copolymers with greater efficiency, generating lower rubber phase domains without the presence of chemical bonds between the matrix and the dispersed phase, which is precisely the object of the present invention.

Patent document US 2005/0277742 describes the production of heterophasic PP copolymers having high impact resistance by using alkyl peroxides, producing copolymers having an optimized balance of properties, producing PP with a melt index up to 10 times greater than the parent PP. The disclosure of the American document differs from the object of the present invention in that it relates to the most efficient form of degradation of PP copolymers rather than to the formation of a compatibilizer *in situ* by reactive extrusion.

Patent document US 6855771 describes the production of isotactic PP block copolymers with other polymers, wherein an extreme degradation of PP takes place in such a manner that so many double bonds are generated by beta scission that a new addition of peroxide causes the recombination of polymeric chains. It is mainly based on the use of recycled PP and the extreme degradation of PP such that blocks of PP and another resin are formed, which differs substantially from the purpose of the present invention.

In the report by Kim, B. Z. (Reactive extrusion of polyolefins and their blends, Korea Polymer Journal, Vol. 4, No. 2, pp 215-226, 1996) there is disclosed a method which provides the compatibilization of PE with PP or EPR phases through the mandatory presence of a coagent that has to be grafted between the phases of the blends by peroxide-generated free radicals. The absence thereof tends to degrade PP without improving the performance. The methodology causes an improvement in the mechanical properties, a reduction in the Flowability Index (FI), as well as a better dispersion of phases. However, the applied method is strongly dependent on the viscosity ratio between the phases and the use of peroxides that react at temperatures above 120 °C, which results in degradation of part of the PP, competing with the grafting of the co-agent. In this regard, an optimized dispersion between the PP and PE or EPR phases is required for the reaction to reach a high efficiency level, limited to pairs of resins of similar viscosity to achieve gains in properties. In the present invention, in addition to the fact that the presence of a coagent is only optional, the method does not rely on the viscosity ratio of phases, occurring at all viscosity ratios commonly found in commercial PP copolymers, being independent of the dispersion phase between phases. Such viscosity ratio can reach very high values (above 10 for materials designed to injection-based processes, for example) and yet there is an improvement in the mechanical properties, a more spherical and better distributed morphology, and also an independence from the form of processing across all possible compositions. The same can be noted for other blends with resins of much higher viscosity. The optional use of a coagent brings about numerous advantages of simplicity of reaction, as it involves one less reaction step during reactive extrusion and provides for the contact with food, since the coagents used have specific migration limits for contacting food.

In view of the foregoing, novel products and possibilities are observed with the method of compatibilization of PP blends as disclosed in the present invention, wherein mixtures of PP with polymers can be made under conditions which are currently deemed to be adverse.

From among all the products that can be obtained by the blends generated in the present invention are all processed materials such as molded parts, automotive parts, packages and bottles, foams, plates, etc.

### Brief description of the invention

The present invention, as defined in the claims, relates to a method of compatibilization by reactive extrusion for the preparation of PP blends having greater chemical compatibility between the phases. Said method comprises mixing at least one polypropylene, which is the first phase of blend, with at least one polymer, which is the second phase of the blend, in the presence of a compatibilizing initiator.

Also, the present invention relates to a compatibilization initiating agent for the preparation of PP blends having greater chemical compatibility between the phases. Said initiator is an agent having a half-life of less than 500 seconds at a temperature of 100 °C OR lower than 1h at 70 °C and a melting temperature lower than 70 °C and is capable of generating radicals at temperatures of less than 120 °C.

Further, the present invention relates to polypropylene blends having greater impact strength, stiffness, such that, in addition to being reprocessable, said blends have greater morphological stability regardless of the shape and processing intensity.

Finally, the present invention further relates to the use of the blends claimed herein for producing a processed material product, such as injection molded and/or thermoformed, extruded parts, such as automotive parts, packages, appliances, other articles and bottles, comprising said polyolefin blend.

### Brief description of the figures

Figure 1.1 depicts the morphology of the sample without reactive extrusion for the PP HDPE system.
Figire 1.2 depicts the morphology of the sample with reactive extrusion for the PP HDPE system.
Figure 2 shows DMA (dynamic-mechanical analysis) curves for PP HDPE blends with and without reactive extrusion.
Figure 3 shows complex viscosity curves of the PP and HDPE blend with and without compatibilization.
Figure 4 shows curves of the viscosity ratio of modified PP to pure HDPE.
Figure 5.1 depicts morphology of the sample without reactive extrusion for the PP SEBS system.
Figure 5.2 depicts morphology of the sample with reactive extrusion for the PP SEBS system.
Figure 6 shows complex viscosity curves for PP and SEBS blends with and without reactive extrusion.
Figure 7 discloses DMA curves for PP LLDPE blends with and without reactive extrusion.
Figure 8 shows complex viscosity curves for PP/LLDPE blends with and without reactive extrusion.
Figure 9 shows curves of the viscosity ratio of modified PP to pure LLDPE.
Figure 10.1 shows the morphology of the PP + LLDPE blend without reactive extrusion. Figure 10.2 shows the morphology of the PP + LLDPE blend with reactive extrusion. Figure 11 shows DMA curves for the PP + SBS blend with and without reactive extrusion,
Figure 12 shows complex viscosity curves of PP + SBS blends with and without reactive extrusion,
Figure 13.1 shows the morphology of the PP + SBS blend without reactive extrusion.
Figure 13.2 shows morphology of the PP + SBS blend with reactive extrusion.
Figure 14.1 shows the morphology of the PP + Engage blend without reactive extrusion.
Figure 14.2 shows the morphology of the PP + Engage blend with reactive extrusion.
Figure 15 shows DMA curves for the PP + TPO blend with and without reactive extrusion.
Figure 16 shows complex viscosity curves of PP/SBS blends with and without reactive extrusion.
Figure 17 shows comparisons between the impact results at 23°C for blends with and without reactive extrusion for several systems.
Figure 18 shows comparisons between the flexural modulus results for blends with and without reactive extrusion for several systems.
Figures 19.1, 19.2, 19.3, 19.4, 19.5 and 19.6 show the morphology of modified PP with different degrees of modification, wherein the degree of modification increases from figure 19.1 towards figure 19.6.
Figure 20 shows complex viscosity curves for the PP copolymer having different degrees of modification by reactive extrusion.
Figure 21 shows the xylene soluble fraction for different degrees of modification, for reactor based PP/EPR blends obtained by reactive extrusion.
Figure 22 shows the flexural modulus for different degrees of modification, for reactor based PP/EPR blends obtained by reactive extrusion.
Figure 23 shows the Izod Impact Strength for different degrees of modification, for reactor based PP/EPR blends obtained by reactive extrusion.
Figure 24 shows the heat deflection temperature (HDT) for different degrees of modification, for reactor based PP/EPR blends obtained by reactive extrusion.
Figure 25.1 presents morphological longitudinal features of the unmodified sample.
Figure 25.2 presents morphological cross-sectional features of the unmodified sample.
Figure 25.3 presents morphological longitudinal features of the modified sample.
Figure 25.4 presents morphological cross-sectional features of the modified sample.
Figure 26 shows results for the current and modified resin, focusing on the evolution in different properties of the resin.

### Detailed description of the invention

A method for compatibilizing PP blends is described in the present patent application, comprising mixing at least one polypropylene with at least one polymer, in the presence of a compatibilization initiator. Said compatibilization takes place preferably by reactive extrusion in an extruder.

For a better understanding of the purposes of the present invention, the method of compatibilizing PP blends must be understood as the preparation of the PP blend having a greater compatibility between its phases. In one preferred embodiment, said method of compatibilizing PP blends comprises a first and a second phases.

PP, which in turn constitutes the first phase of the blend prepared by the method disclosed herein is selected from the group comprising polypropylene homopolymer, random copolymer or heterophasic copolymer, having a Flowability Index (FI) between 0.1 and 100g/10min, more preferably between 1 and 80g/10min.

The polymer, which constitutes the second phase of the blend prepared in accordance with the method disclosed herein, is selected from high-density polyethylene (HDPE), low density polyethylene (LDPE), linear low-density polyethylene (LLDPE), ethene-octene, ethene-butene, ethene-hexene and ethene-propylene copolymers at any proportion, propene-butene copolymers at any proportion, ethene-propylene rubber (EPR) at any proportion, polyisobutylene rubber (PIB), EPDM, nitrilic rubber (NBR), natural rubber (NR), isoprenic rubber (IR), fluorinated rubbers, chlorinated rubbers, butyl rubber (BR), butene-styrene rubber (SBR), thermoplastic butene-styrene rubber (SBS), thermoplastic ethylene-butene-styrene rubber (SEBS), butyl polyteraphthalate (PBT), thermoplastic ethylene-propylene-styrene rubber (SEPS), polystyrene (PS), polyethylene terephthalate (PET), trimethyl polyteraphthalate (PTT), polyesters, vinylidene polychloride (PVDC), polyvinylidene difluoride (PVDF), ethylene vinyl acetate copolymers (EVA), ethylene vinyl alcohol copolymers (EVOH), trimethyl polyteraphthalate, polyamide 6 (PA6), polyamide 66 (PA66), polyamide 69 (PA69), polyamide 11 (PA11), amorphous polyamide, polyacetal (POM) and copolymers thereof, polyanilines (PAN), polyimides (PEK, PEEK), polycarbonates (PC), acrylonitrile-butadiene styrene copolymers (ABS), polymethyl methacrylate and copolymers thereof (PMMA), acrylonitrile copolymers (SAN) at any proportion of copolymers and mixtures thereof.

In a preferred manner, the second phase of the PP blend is a propene rubber with ethene or another comonomer comprising from 4 to 8 carbon atoms (and mixtures of comonomers) at any proportion, more preferably an ethene-propene rubber at any proportion (EPR).

In one preferred embodiment, the blend is obtained directly from the reactor.

By compatibilizing initiating agent, it is understood any radical-generating agent having high reactivity, a half-life of less than 500 seconds at a temperature of 100°C or less than 1h at the temperature of 70°C and a melting temperature of less than 70°C, that is capable of generating radicals at temperatures of less than 120°C. There is disclosed in the present invention that other free radical generating compounds and hydrogen abstractor compounds can be used in a method of compatibilizing PP blends, provided that the mechanism thereof leads to a reaction between the matrix PP phase and the dispersed phase.

The initiating agent used in the present method is selected from the group comprising peroxides, amines and azo-compounds, the use of organic peroxides or hydroperoxide being preferred, or even any radical generating agent or mixing process at temperatures of less than 120°C.

From among the peroxides used as initiating agents for the compatibilization of PP blends, are preferably those selected from the group comprising dicetyl peroxide dicarbonate, bis(2-ethyl-hexyl) peroxydicarbonate, dimyristyl peroxide dicarbonate, hydrogen peroxide or a mixture thereof,

The free radical generating compound can be additivated by different means, such as in liquid form, dissolved in solvents, incorporated into solid vehicles (such as, for example, polymer powder), or directly in powder form, being dosed at different positions of the extruder.

Other compounds, such as azides and sulfonazides can be mixed with PP, causing coupling between the phases.

After defining the terms used throughout the present patent application, details of the method of compatibilization of PP blends are provided below.

In the present invention, the blend is modified by means of a compatibilizing initiating agent that acts on the reactive extrusion of PP, generating free radicals, thus generating chemical bonds between the phases of the blend. In a preferred embodiment, the initiating agent, already in a liquid state, coats the particles present in the mixture and reacts with the polymeric chains of the phases, allowing a recombination of radicals of phases to take place and forming bonds between them, thus generating an *in situ* compatibilizer (PP grafted with the second-phase polymer). Only a portion of the phases is grafted to generate the compatibilizer.

After the modification made by the compatibilizing initiating agent, the PP blend (already made of an *in situ* produced compatibilizer) is capable of being melted again, whereupon the compatibilizer will migrate thermodynamically to the interface between phases, reducing the interfacial tension and accordingly decreasing the average particle size. The presence of this compatibilizer interface allows for a greater stability of the phases and, therefore, the processing effects become less effective. Morphology of the blend phases may also change, resulting in gains in properties caused by the improvement provided by the present invention.

The ratio between the blend phases can vary from about 15% to about 99.9% by weight of PP (first phase of the blend), and about 0.01 % to about 85% by weight, of the polymer (second phase of the blend). Preferably, the mixture of the blend phases comprises from about 60% to 97% by weight of the first phase of the blend, and about 3% to 40% by weight of the second phase of the blend.

The compatibilizing initiator is present in an amount ranging from 0.1 to 1.5% by weight based on the total weight of the blend composition. Where the starting material used is dicetyl peroxide dicarbonate, it is preferably present at from 0.25 to 0.5% by weight, based on the total weight of the blend composition.

The first and second phases of the blend may be added separately to the extruder, or concurrently, wherein when the phases are added together, they can be present in the same particle (reactor blend) or in separate particles. Preferably, the phases are added simultaneously, more preferably the phases are present in the same particle (reactor blend).

The mixture between the two phases can occur with the PP in the form of granules, powder, solution, emulsion or suspension, and the polymer in the form of a liquid, suspension, emulsion, solution, powder or granules. The second phase of the blend can also be attacked by free radicals and compatibilized with the first phase by means of a compatibilizing coagent that functions to stabilize the free radicals, promoting compatibilization. The compatibilizing coagent is selected from succinic acids, styrenic compounds, vinyl compounds, acrylates, acetylenics, silanes, sulfonazides, etc., or any polyfunctional compound. These agents tend to act as "bridges" between the generated free radicals, thus improving, in some instances the compatibilization efficiency.

In addition, fillers can be added to the mixture of the invention. These fillers are designated to increase the compatibilization between the phases via covalent bonds, being selected from modified clays, silicas, fibers, carbonates and other surface-modified or -unmodified fillers, with organic or inorganic components. Functionalized fillers can have their organic modification attacked during the process and can bind chemically to the polyolefin, causing some polarity and, in some cases, increasing the compatibility with other polymers.

The mixture of the first phase of the blend with the second phase of the blend may take place either before or after the industrial plant extruder (can be made by composters, for example) and can be performed either continuously, such as by injection or by single- or twin-screw extruder, or discontinuously by rotational molding or separately in a batch.

The mixture between the first and the second phases of the blend can also take place in a continuous or discontinuous mixer, or directly in single-screw extruder or a twin screw extruder in the presence of the compatibilizing initiating agent.

Mixing can also be followed by a processing by extrusion/granulation or extrusion of tubular films or extrusion of flat films or extrusion of sheets or extrusion/blowing or extrusion/spinning or extrusion/foaming or injection, wherein the second phase of the blend can be composted with fillers and fibers or previously mixed in any other mixing process, such as extrusion or in reactors, for example.

The polymer produced by the method of compatibilization of the blend can be reprocessed as many times as necessary, facilitating the reuse thereof in the molding site.

A mixture with a second peroxide can be made for the known purposes of rheological control, by adjusting the parameters in accordance with the application's requirements, while maintaining the compatibilization provided for in the first phase of the reactive extrusion.

It is also possible to obtain very fine morphologies, even when operating with very high differences in viscosity between the phases, and one can then mix high viscosity rubbers with low viscosity PP matrices, for example, to obtain good mechanical properties, particularly, impact and processability properties, because there will be no tendency to form rubber agglomerates (coalescence).

The blends obtained by the method of the present invention exhibit an impact strength ranging from 30 to 1500 J/m, a stiffness ranging from 550 a 3200 MPa, flowability ranging from 0.5 to 200 g/10min, a crystallization temperature ranging from 90 to 150 °C, and a heat distortion temperature ranging from 80 to 160 °C. These properties being applicable for both ambient temperatures and lower temperatures, that is, temperatures of less than ambient temperature.

The blends of the present invention exhibit high nucleation without the need for extra additives due to the molecular restriction imposed by the formation of branches *(grafts).* Thus, the use of customary nucleating agents is not necessary for one to achieve higher crystallization temperatures. The use thereof can be applicable if there are any synergistic features with the object of the present invention.

### EXAMPLES

### Sample preparation

Compositions were made in a twin screw extruder, Coperion ZSK 26, with the mixtures being processed at a rate of 40 kg/h and a suitable rotation, as a function of the required torque. Mixing of PP with the blend components was made in Mixaco mixers and added to a Brabender gravimetric feeder.

Samples were injected into test specimens in the ASTM D638 format, according to D-3641 standard, impact-fractured at low temperatures according to ASTM D-256. Surfaces of the samples were treated in xylene at 70 °C for 1 hour to remove part of the phase of HDPE, LLDPE and rubbers, for observation by scanning electron microscopy to view morphology. The flexural modulus was measured according to ASTM D-790, mixtures of Examples 1 to 5 were made in a composition, by weight, of 89:10:1 (first phase:second phase:initiator). The peroxide used was dicetyl peroxide dicarbonate. The used temperature profile was the same, values of 160, 190, 190, 190, 190, 200, 210, 215, 215 and 215°C being used in the heating and matrix zones.

### Example 1 - Blends SD PP with HDPE:

Polypropylene having IF of 3.5 g/10 min, in the form of granules, was mixed with a HDPE powder having IF of 0.35 g/10min, directly in the extruder with the addition of 1% by weight of the peroxide dicetyl peroxide dicarbonate.

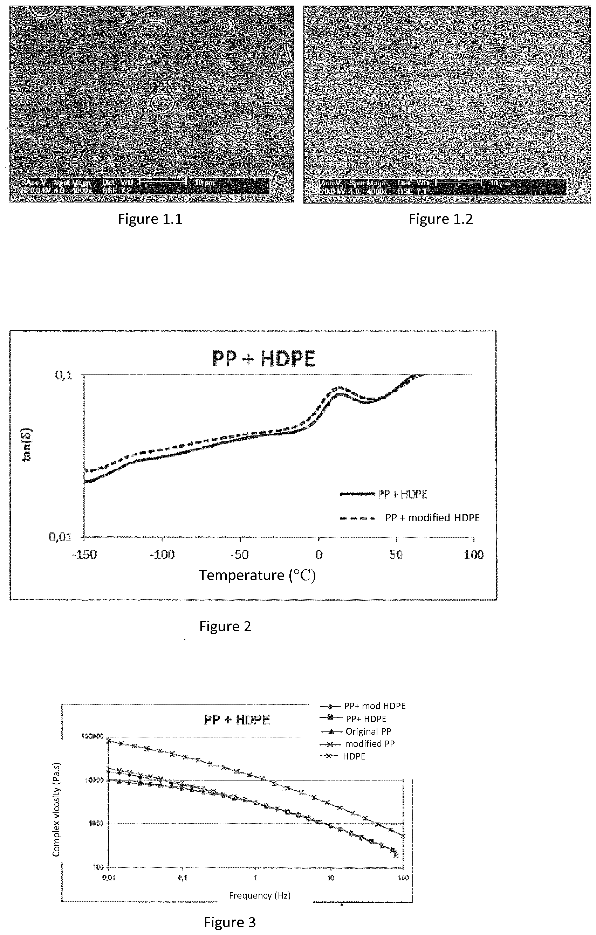

The morphological results depicted in Figures 1.1 and 1.2 present the typical morphology of a compatible blend, resulting in dispersed, well distributed phases of reduced size. Figure 1.1 refers to the morphology of the sample without reactive extrusion for the PP HDPE system and Figure 1.2 refers to the morphology of the sample with reactive extrusion for the PP HDPE system.

Upon extracting the PE phases in the reactive and non-reactive mixtures, it was noted that, after reactive extrusion, the soluble fraction was significantly reduced, which shows that some of the dispersed phase began to chemically bind to the matrix, as a result of the compatibilization process.

In Figure 2, it is noted that the glass transition temperature did not change significantly in any of the PP or PE peaks. However, the complex viscosity of the modified product has shown a significant change at the low frequency region, indicating the existence of high molecular weight components, as shown in Figure 3. This, combined with scanning electron microscopy micrographs, demonstrates that the method promotes compatibilization of phases in addition to a balance between their viscosities, allowing for a better distribution of the same and the formation of smaller domains.

One notes that without the compatibilization, the blend behaves as the PP matrix, showing little interaction between the phases. With compatibilization, two effects can account for the more refined structure:
- A balance between the viscosity ratio: compatibilization acts preferably on PP, increasing its molecular weight and allowing for a greater possibility of HDPE dispersion (more viscous), with a viscosity ratio tending to be within the range of from 1 to 2.
- Formation of PP-HDPE block copolymer, located at the phases interface, and acting as compatibilizer.

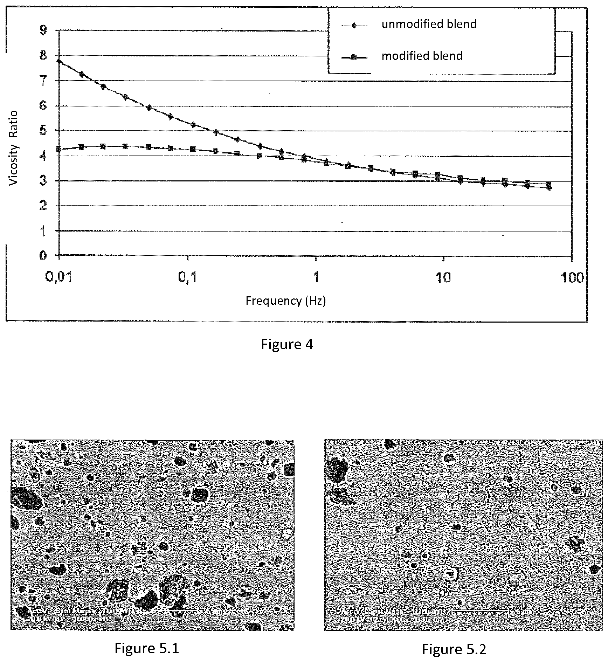

It is possible that the aforementioned mechanisms coexist, and to verify that, we compared the viscosity ratios between modified PP and pure HDPE, the results of the comparison being shown in Figure 4.

One notes that since viscosity of the HDPE dispersed phase is too high, the viscosity ratio tends to be always very high, even in the case of the modified matrix. The values are too high and the matrix is not able to deform the particles due to their high viscosity.

The present invention provides a much finer dispersion of particles due to the formation of copolymers, which significantly reduce the interfacial tension, enabling the capillary number (Ca) of the blend to be raised to values above the critical capillary number for deformation (Cacrit).

### Example 2 - Blends of PP with SEBS:

10% SEBS (ethene-butadiene-styrene copolymers) in the form of "flakes" from Petroflex, code no. 2061, was added to a polypropylene homopolymer having IF of 3.5 g/10 min, in the form of granules. Morphological results of the sample with no reactive extrusion for the for PP SEBS system are shown in Figure 5.1, and the sample morphology with reactive extrusion for the PP SEBS system is shown in Figure 5.2.

One notes a slight improvement in the particle distribution and apparently more intense region around the particles of the modified sample. It shows a better compatibilization between the phases. DMA results show a change in the glass transition temperature (Tg) of the polymers, indicating greater compatibilization between phases. A slight increase in SEBS Tg from -47 to -43 °C was noted, which is a result of the formation of PP-SEBS copolymers. Due to the components ratio, no variation in Tg of the PP is observed, which is of about 16 °C. Considering that the SEBS was added to the system in the form of "flakes", the premix between it and the PP (granules) has shown a small contact area and, hence the obtained values should be much better with the addition thereof in the pulverized form.

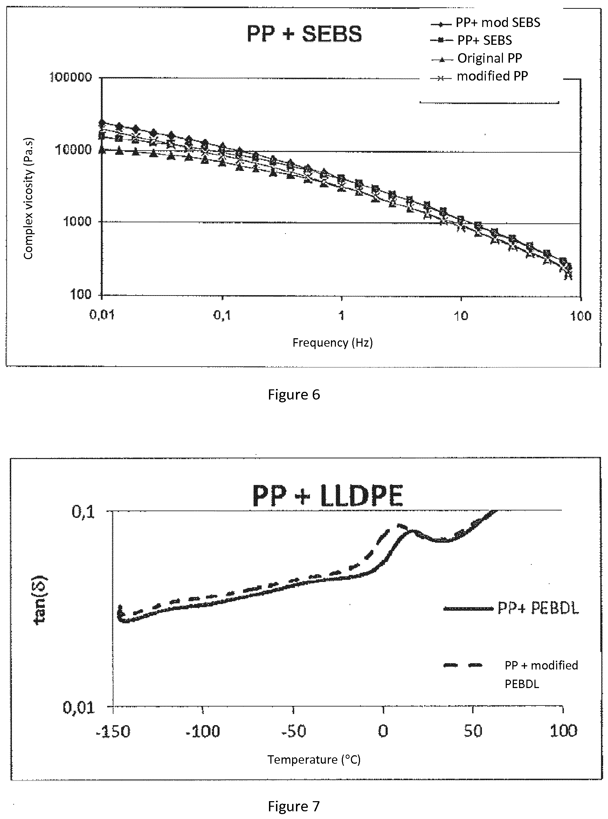

In Figure 6, one notes that the change between complex viscosities takes place mainly in the low frequency region, as a result of the features of modified PP. Compatibilization between phases has increased the system viscosity, shifting the viscosity to higher values.

### Example 3 - Blends of PP with LLDPE:

In this blend, one notes that there was a reduction in the glass transition temperature, via tan(δ) of the PP of from 17.0 °C to 8.5 °C. This data alone is a strong indicator of compatibilization via reactive extrusion of PP with LLDPE, as shown in Figure 7.

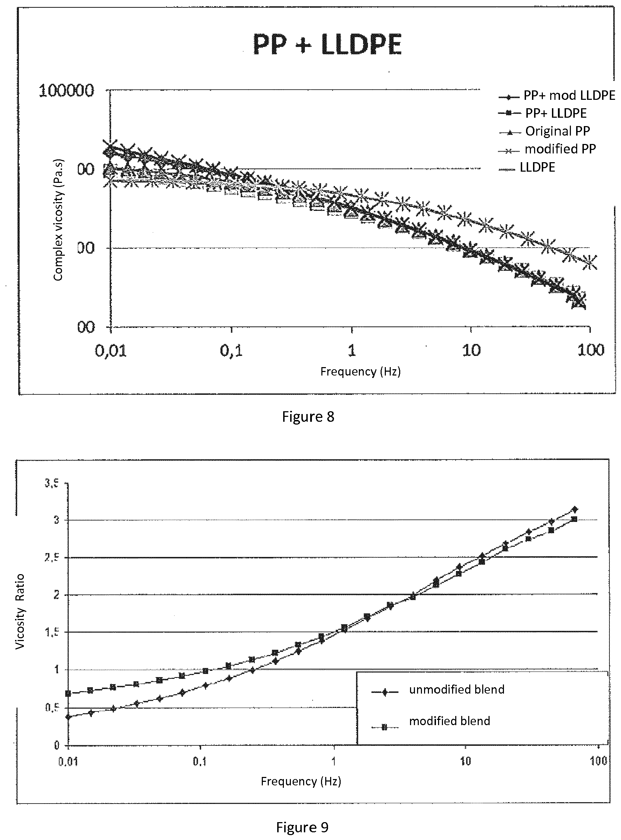

The same behavior as HDPE is noted in the viscosity of PP/LLDPE blends, which can be seen in Figure 8.

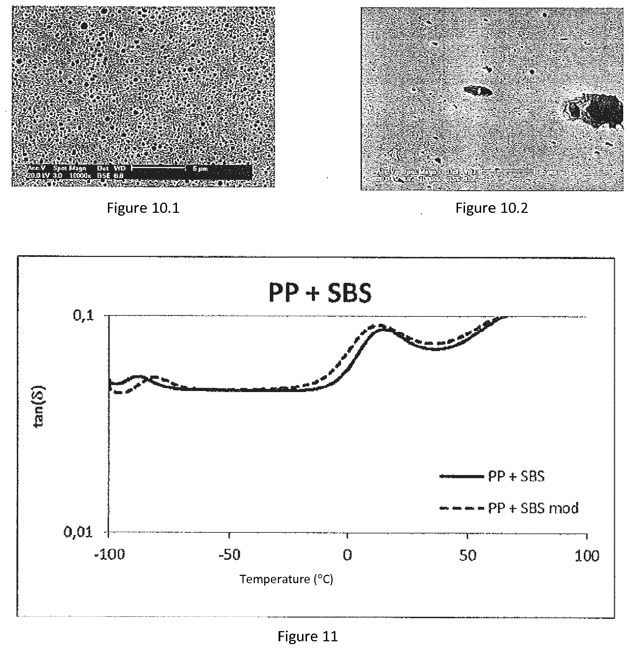

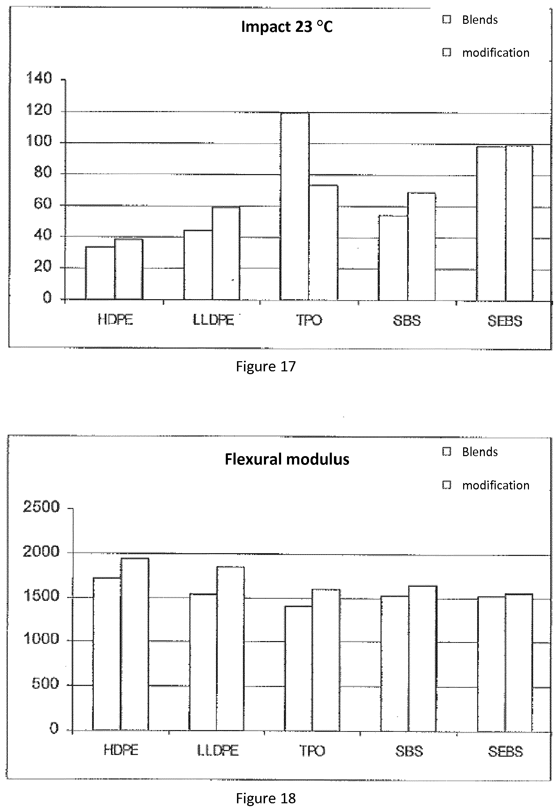

Figure 9 shows that the modified PP has a higher frequency range, wherein the viscosity ratio is between 1 and 2 and, hence, one expects a better distribution of phases, with smaller domains of the dispersed phase. For a conclusive condition, one should verify the morphology of the samples shown in Figure 10.1 and 10.2, where it can be seen that the LLDPE domains are much smaller and spherical in the modified sample, while the mechanical results are not as significant, as can be seen in Figures 17 and 18.

### Example 4 - Blends SD PP with SBS:

The same PP as the previous examples, having IF of 3.5 g/10min in the form of granules, was mixed with the SBS in the form of "flakes".

Upon analyzing the values obtained by the DMA technical, it is noted that there was a considerable change in the glass transition temperatures (Tg) of both phases: PP had the glass transition temperature shifted to lower values (of from 16.5 to 14.4°C) and the peak relating to SBS has increased (of from -86 to -79°C). In this event, even though the form of mixture is similar to Example 02, there was a clear formation of compatibilization between the blend components, acting upon the two phases of the system, as shown in Figure 11.

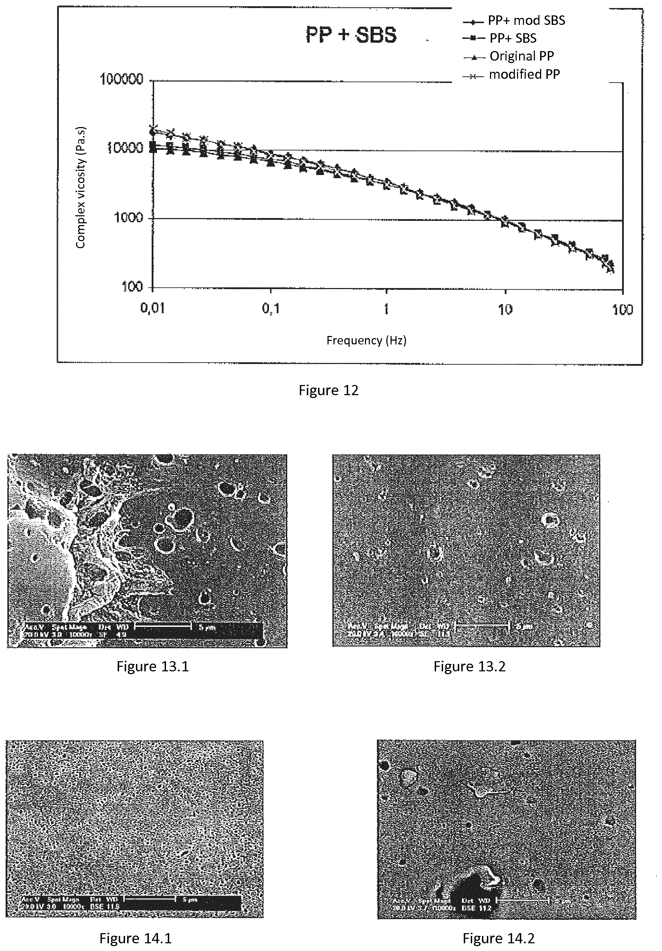

In Figure 12 it is observed that, in this system, the viscosity of the blend, with or without performing the compatibilization procedure, is equal to the viscosity of pure PP. Formation of the desired copolymer did not mean the formation of ultra-high molecular weight compounds, which could make processability of system difficult. Thus, one can design the final product more easily from the matrix alone.

Morphology of PP/SBS blends is shown in Figures 13.1 and 13.2, where an improvement in the dispersion of SBS into PP can be observed as well as the existence of smaller and more spherical particles, with the modification.

### Example 5 - Blends of PP and olefinic thermoplastic polymers (TPO);

The mixture of PP with TPO, in this case Engage® 8200 copolymer from Dow, in the form of granules, was made with the pellets thereof added at a fraction of 10% to the PP homopolymer spheres having IF of 3.5 g/10 min. The ethene-octene copolymers are known to have high compatibility with PP. This is demonstrated by the morphology shown in Figures 14.1 and 14.2

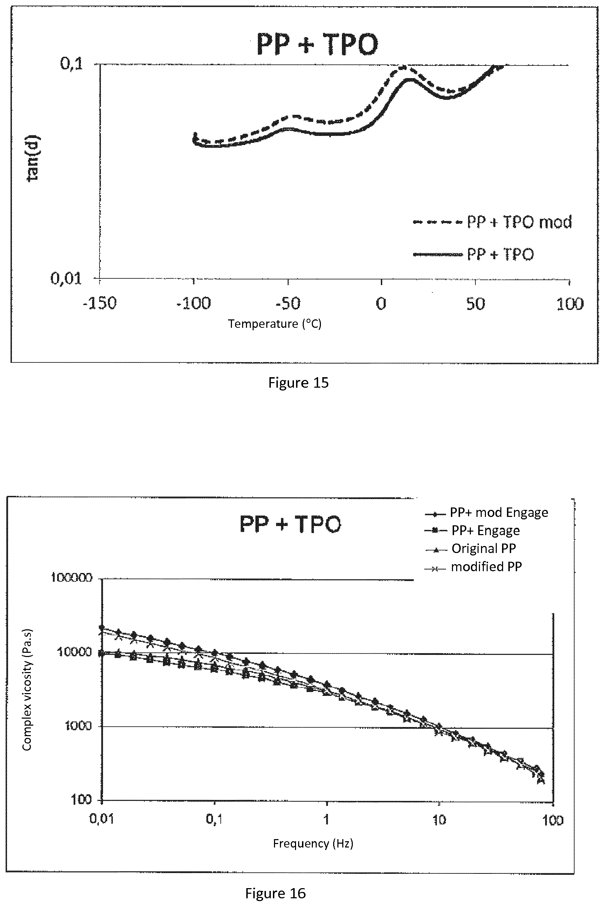

Figures 14.1 and 14.2 show that the size of the Engage® TPO droplets in the sample without treatment was much lower than those present in the sample from reactive extrusion. However, the DMA results, as shown in Figure 15, indicate that copolymers were formed and said compatibilization did lead to a greater dispersion. The result shows the same pattern as Example 02.

The DMA results indicate the reduction in the PP Tg by 3 °C (of from 16.5 to 13.5) and an increase in the Tg of the TPO phase (Engage®) at 4 °C (of from -48 to - 44 °C).

Rheological data is shown in Figure 16, where again the viscosity of the blend tends to be similar to that of pure PP, in spite of reactive extrusion. It can be considered that if the dispersed phase was in the form of a powder, efficiency would be much greater than that observed. For this mixture, the expected mechanical results were not achieved.

### Mechanical properties of the reactive extrusion blends

The above examples were compared so as to provide understanding of the mechanical behavior caused by the morphological changes, as shown in Figures 17 and 18.

All the blends compatibilized by extrusion, except for the blend with Engage®, showed improved impact strength, particularly the blends with SBS and LLDPE. The blends showed opposite morphological behaviors, where the dispersion has deteriorated in the case of the blend compatibilized with LLDPE and has improved with SBS, which shows that in addition to the size of the phases, the presence of a compatibilizer strongly affects the properties of the final product.

Because of the features of the reaction, all products had greater stiffness. The gain in stiffness, with an increase in the impact property is extremely desirable for engineering and general applications. The generated products exhibit better specifications for both the modulus and stiffness, gaining from 8 to 20% in stiffness and from 5 to 30% in impact. The main factor is that compatibilized blends tend to retain their morphology regardless of the intensity and of how many times they are processed. Such morphological stabilization is very important for products applied to several different transformers, in addition to providing stability properties, which are desirable by resin manufacturers.

### Example 6 - Blends of PP with EPR (in situ):

Blends of PP and EPR can be directly produced in the reactor, and they have excellent distribution and a great particle size. However, in spite of the high compatibility between the phases, coalescence may take place. The use of modifiers can generate bonds between the phases and, thereby provide a greater degree of modification of the conventional PP with the same current levels of EPR. To this end, we used the method of the present invention to compatibilize these reactor blends by reactive extrusion.

First, a reactor PP copolymer having IF of 6 g/10min was used, according to the following considerations, by adding various concentrations of dicetyl peroxide dicarbonate. The sample was in the form of spherical grains, directly from the reactor.

By adding different degrees of modification, significant changes in the morphologies of the injected and/or extruded samples can be obtained.

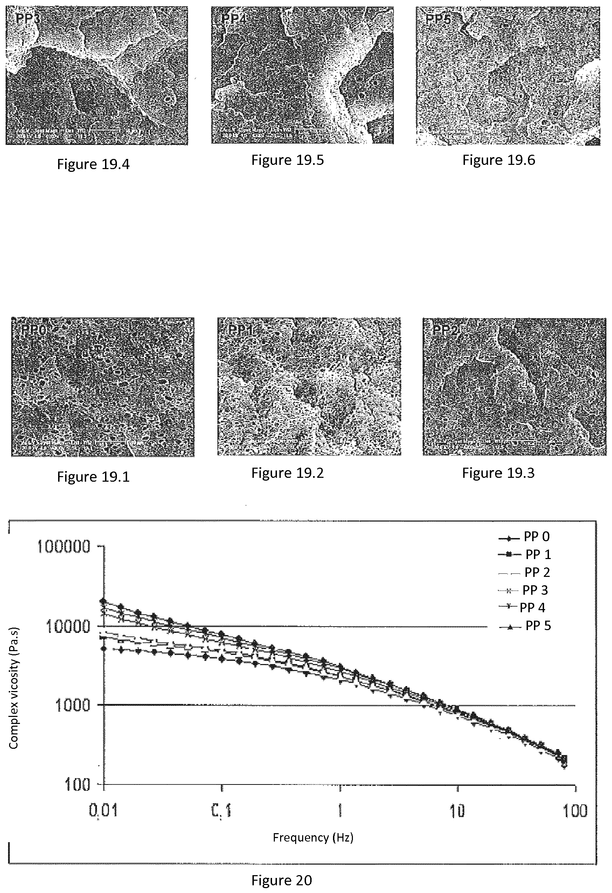

Rheological properties were observed in the modified PP, which were designated PP 0 to 5, where 0 is PP without any modification, and the degree of modification is increased until sample 5 (greater degree of modification). It is understood that the degree of modification increases with the increase in the percentage of compatibilizing initiator used. Results of the micrographs are shown in Figures 19.1 (PP 0), 19.2 (PP 1), 19.3 (PP 2), 19.4 (PP 3), 19.5 (PP 4) and 19.6 (PP 5), where a great reduction in the EPR particle size is observed. Figure 20 shows the results of rheological measurements, where the interaction of the EPR phase with the PP matrix shows changes, mainly in the low frequency regions where the bonds formed between the PP/EPR phases cause the viscosity to increase. This is due to the interaction between the matrix and the EPR phase, of high viscosity index.

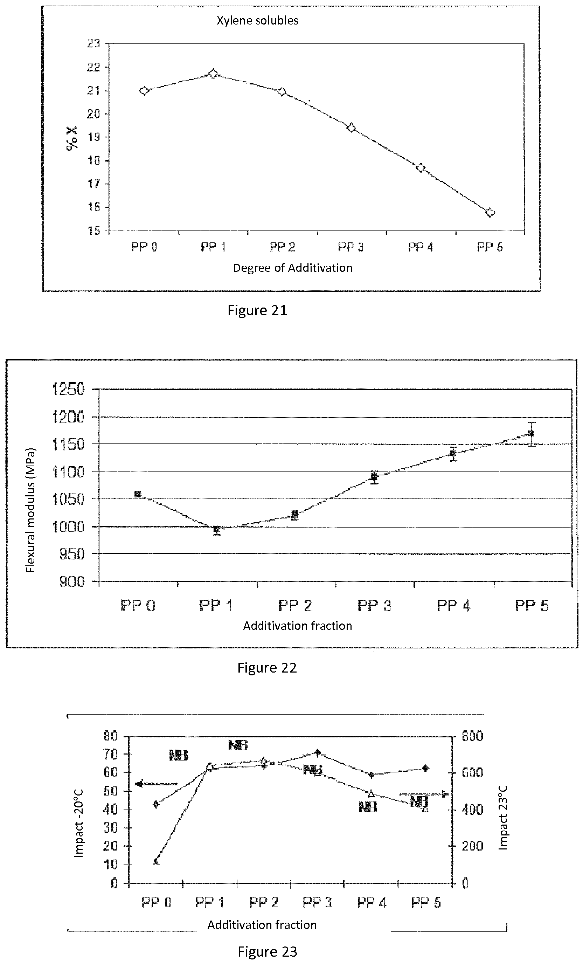

In Figure 21, it is observed that in the compatibilized blends (PP 0 to 5), as the modification via reactive extrusion increases, the fraction of xylene soluble polymer becomes increasingly smaller. This can be explained by the formation of bonds between the PP matrix and EPR dispersed phase, which is retained in the dissolution procedure, as it has a chemical bond attaching it to part of a PP molecule that retains it crystallized in the matrix. Thus, the higher the intensity of reactive extrusion, the less EPR molecules are extracted by the solvent, being retained by the matrix. As explained above, these PP-EPR copolymer molecules act as a compatibilizer of the system, thereby reducing interfacial tension and allowing for a greater dispersion of the EPR phase and the consequent smaller particle size.

Stiffness of the samples of PP 0 to 5 is shown in Figure 22, where it is observed that in the early stages of compatibilization, there is a drop in the modulus in the order of 5%, which is then recovered soon after, growing as the modification content increases.

Impact strength at room temperature and at -20 °C is shown in Figure 23, which it is observed that, even with small amounts of the modifier, the sample does exceed completely the Izod impact test, being classified as NB (does not break), thus it is not possible to numerically compare this property with the level of additivation. In relation to the impact at low temperatures, it is noted that the greater the change via reactive extrusion, the higher the impact strength of the final products. The explanation lies in the fact that the blend reactor or heterophasic copolymer has a greater interaction between the matrix and the EPR phase and accordingly, a greater formation of toughening mechanisms.

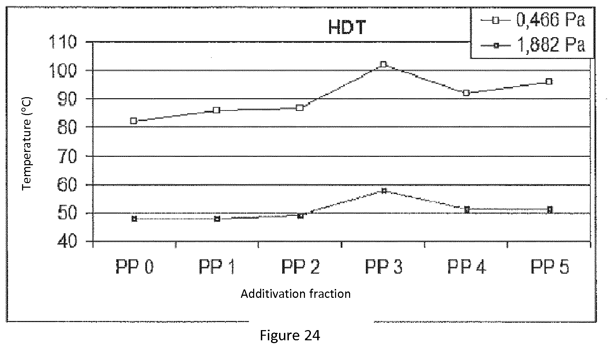

The operating temperature is also affected, as shown in Figure 24, where it is shown that the degree of modification tends to increase the usage temperature of the copolymers, especially for PP 3, which has a gain of approximately 20 °C. For higher levels, an increase in the usage temperature reaches 10 °C. This result alone is already very significant in the applications of heterophasic PP copolymers, there is no similar precedent without the addition of mineral fillers.

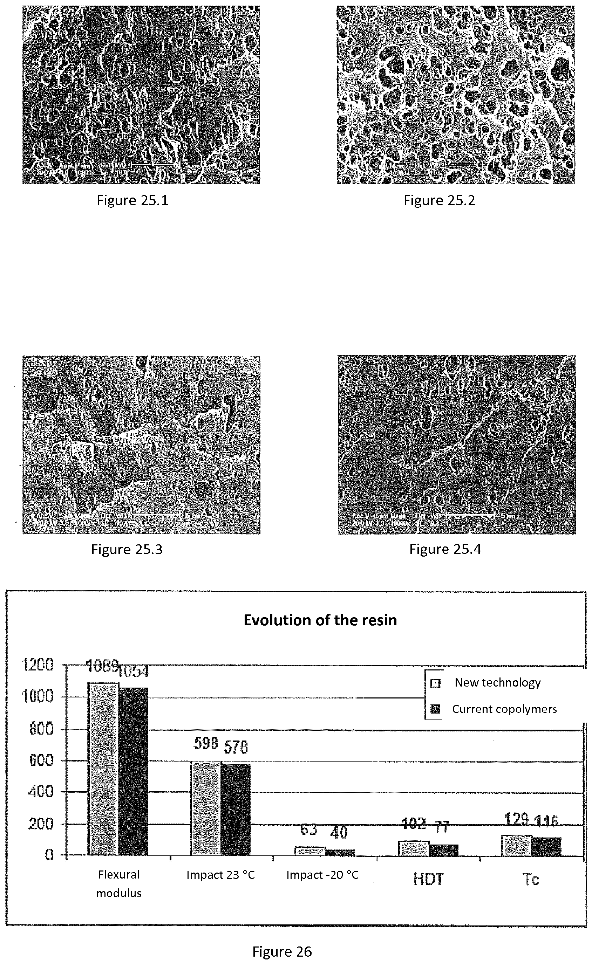

Stabilization of phases is shown in Figures 25.1, 25.2, 25.3 and 25.4, where the maintenance of the morphological characteristics of the resin when modified by the disclosed technique is evident. Significant gains in properties, and especially, in the stability of the resin properties are achieved, because the optimal maintenance of morphology provides a greater degree of independence of the processing conditions throughout the thickness of a molded part. It is noted that, in the non-modified samples, the EPR phase is elongated towards the flow on the superficial layers of an injected specimen. The same modified sample does not show such morphological variations between the surface and the central region of the injected specimen, being more stable and, hence not being as affected by the change in the molding conditions.

### Example 7: Blends of PP with EPR (in situ):

The PP heterophasic copolymer samples were in the form of spherical grains directly, from the reactor and were generated by adding 0.5% by weight of dicetyl peroxide dicarbonate.

Figure 26 shows that the same resin can exhibit property values, especially impact values, that are much higher than the current levels, including at low usage temperatures, allowing for a reduction of the walls and new applications where this is a limiting feature.

After describing examples, it should be appreciated that the scope of the present invention contemplates other possible variations, only being limited by the content of the appended claims, including possible equivalents thereof.

## Claims

1. A method of compatibilization of polypropylene blends, **characterized in that** it comprises mixing at least one polypropylene with at least one polymer, the mixture being in the presence of a compatibilizing initiating agent, wherein said compatabilizing initiating agent is a radical-generating compound at a temperature below 120°C, comprising a half-life of less than 1h at temperatures of less than 70°C, or a hydrogen abstractor coupling agent, wherein the polypropylene represents a first phase of the blend and the at least one polymer represents a second phase of the blend, wherein the first phase of the blend and the second phase of the blend are added concomitantly to the mixture and a compatibilizer is generated *in situ;* and further **characterized in that** the at least one polymer is selected form the group consisting of from high-density polyethylene (HDPE), low density polyethylene (LDPE), linear low-density polyethylene (LLDPE), ethene-propylene copolymers, ethene-butene copolymers, ethene-butene copolymers, ethene-octene copolymer, propene-butene copolymers, ethene-hexene copolymers, ethene-propylene rubber (EPR), polyisobutylene rubber (PIB), EPDM, nitrilic rubber (NBR), natural rubber (NR), isoprenic rubber (IR), fluorinated rubbers, chlorinated rubbers, butyl rubber (BR), butene-styrene rubber (SBR), thermoplastic butene-styrene rubber (SBS), thermoplastic ethylene-butenestyrene rubber (SEBS), thermoplastic ethylene-propylene-styrene rubber (SEPS), polystyrene (PS), polyethylene terephthalate (PET), trimethyl polyteraphthalate (PTT), polyesters, vinylidene polychloride (PVC), polyvinylidene difluoride (PVDF), ethylene vinyl acetate copolymers (EVA), ethylene vinyl alcohol copolymers (EVOH), trimethyl polyteraphthalate, polyamide 6 (PA6), polyamide 66 (PA66), polyamide 69 (PA69), polyamide 11 (PA11), amorphous polyamides, polyacetal (POM) and copolymers thereof, polyanilines (PAN), polyimides (PEK, PEEK), polycarbonates (PC), acrylonitrile-butadiene styrene copolymers (ABS), polymethyl methacrylate and copolymers thereof (PMMA), acrylonitrile copolymers (SAN), butyl polyteraphthalate (PBT) and mixtures thereof.

2. The method of claim 1, **characterized in that** the compatibilization takes place by reactive extrusion.

3. The method of any one of claims 1 to 2, **characterized in that** the phases of the blend are present in the same particle.

4. The method of claim 1, **characterized in that** the polypropylene is selected from a homopolymer, a random copolymer and a heterophasic copolymer, and mixtures thereof.

5. The method of claim 1, **characterized in that** the polymer is selected from rubbers of ethene with a comonomer comprising from 4 to 8 carbon atoms, or a mixture of these comonomers.

6. The method of any one of claims 1 to 5, **characterized in that** the mixture comprises from 15% to 99.9% polypropylene and from 0.1 % to 85% polymer.

7. The method of any one of claims 1 or 6, **characterized in that** the compatibilizing initiating agent is selected from organic peroxides, hydroperoxide, amines, amino-silanes, sulfonazides and azo-compounds.

8. The method of claim 7, **characterized in that** the peroxide is selected from dicetyl peroxide dicarbonate, bis(2-ethyl-hexyl)peroxydicarbonate, dimyristyl peroxide dicarbonate and hydrogen peroxide or a mixture thereof.

9. The method of any one of claims 1 to 8, **characterized in that** the polypropylene is in the form of granules, powder, solution, emulsion or suspension, and/or **characterized in that** the polymer is in liquid state, in suspension, emulsion, solution, powder, particles or in the form of granules, or is synthesized together with the first phase.

10. The method of any one of claims 1 to 9, **characterized in that** it comprises one or more fillers selected from modified clays, silicas, fibers, carbonates and other surface-modified or -unmodified fillers, with organic or inorganic components or a mixture thereof.

11. The method of any one of claims 1 to 10, **characterized in that** the mixture is made either continuously by injection or extrusion, or discontinuously by rotational molding or separately in a batch, and/or **characterized in that** mixing is made in a continuous mixer or discontinuous mixer, or directly in a single screw extruder or twin screw extruder.

12. The method of any one of claims 1 to 11, **characterized in that** mixing is followed by a extrusion/granulation, extrusion of tubular films or extrusion of flat films or extrusion/blowing or extrusion/spinning or extrusion/foaming or injection or extrusion of sheets.

13. The polypropylene blend made as in the method of claims 1 to 10, **characterized in that** the phases thereof are morphologically stabilized, wherein the blend optionally has an impact strength of 30 to 1500 J/m, a stiffness of from 550 to 3200 MPa, a flowability of 0.5 to 200 g/10min, a crystallization temperature of from 90 to 150 °C, a heat distortion temperature of from 80 to 160°C.

14. A use of the polypropylene blend of claim 13, **characterized in that** it is for producing a processed material product.

15. A product **characterized in that** it comprises a polypropylene blend of claim 13.

## Patentansprüche

1. Ein Verfahren zur Kompatibilisierung von Polypropylen-Blends, **dadurch gekennzeichnet, dass** es das Mischen von mindestens einem Polypropylen mit mindestens einem Polymer umfasst, wobei die Mischung in Gegenwart eines kompatibilisierenden Initiierungsmittels vorliegt, wobei das kompatibilisierende Initiierungsmittel eine radikalbildende Verbindung bei einer Temperatur unterhalb von 120 °C ist, umfassend eine Halbwertszeit von weniger als 1 h bei Temperaturen von weniger als 70 °C, oder ein Wasserstoff-Entzieher-Kopplungsmittel ist, wobei das Polypropylen eine erste Phase des Blends darstellt und das mindestens eine Polymer eine zweite Phase des Blends darstellt, wobei die erste Phase des Blends und die zweite Phase des Blends gleichzeitig zur Mischung zugegeben werden und ein Kompatibilisator *in situ* erzeugt wird; und ferner **dadurch gekennzeichnet, dass** das mindestens eine Polymer ausgewählt ist aus der Gruppe bestehend aus Polyethylen hoher Dichte (HDPE), Polyethylen niedriger Dichte (LDPE), lineares Polyethylen niedriger Dichte (LLDPE), Ethen-Propylen-Copolymere, Ethen-Buten-Copolymere, Ethen-Buten-Copolymere, Ethen-Octen-Copolymer, Propen-Buten-Copolymere, Ethen-Hexen-Copolymere, Ethylen-Propylen-Kautschuk (EPR), Polyisobutylenkautschuk (PIB), EPDM, Nitrilkautschuk (NBR), Naturkautschuk (NR), Isoprenkautschuk (IR), fluorierte Kautschuke, chlorierte Kautschuke, Butylkautschuk (BR), Buten-Styrol-Kautschuk (SBR), thermoplastischer Buten-Styrol-Kautschuk (SBS), thermoplastischer Ethylen-Buten-Styrol-Kautschuk (SEBS), thermoplastischer Ethylen-Propylen-Styrol-Kautschuk (SEPS), Polystyrol (PS), Polyethylenterephthalat (PET), Trimethylpolyteraphthalat (PTT), Polyester, Polyvinylidenchlorid (PVC), Polyvinylidendifluorid (PVDF), Ethylenvinylacetat-Copolymere (EVA), Ethylen-Vinylalkohol-Copolymere (EVOH), Trimethylpolyteraphthalat, Polyamid 6 (PA6), Polyamid 69 (PA66), Polyamid 69 (PA69), Polyamid 11 (PA11), amorphe Polyamide, Polyacetal (POM) und Copolymere davon, Polyaniline (PAN), Polyimide (PEK, PEEK ), Polycarbonate (PC), Acrylnitril-Butadien-Styrol-Copolymere (ABS), Polymethylmethacrylat und Copolymere davon (PMMA), Acrylnitril-Copolymere (SAN), Polybutylteraphthalat (PBT) und Mischungen davon.

2. Das Verfahren nach Anspruch 1, **dadurch gekennzeichnet, dass** die Kompatibilisierung durch reaktive Extrusion stattfindet.

3. Das Verfahren nach einem der Ansprüche 1 bis 2, **dadurch gekennzeichnet, dass** die Phasen des Blends in demselben Partikel vorhanden sind.

4. Verfahren nach Anspruch 1, **dadurch gekennzeichnet, dass** das Polypropylen aus einem Homopolymer, einem statistischen Copolymer und einem heterophasischen Copolymer und Mischungen davon ausgewählt ist.

5. Das Verfahren nach Anspruch 1, **dadurch gekennzeichnet, dass** das Polymer aus Kautschuken aus Ethen mit einem Comonomer, das 4 bis 8 Kohlenstoffatome aufweist, oder einer Mischung aus diesen Comonomeren ausgewählt ist.

6. Das Verfahren nach einem der Ansprüche 1 bis 5, **dadurch gekennzeichnet, dass** die Mischung von 15 % bis 99,9 % Polypropylen und von 0,1 % bis 85 % Polymer umfasst.

7. Das Verfahren nach einem der Ansprüche 1 oder 6, **dadurch gekennzeichnet, dass** das kompatibilisierende Initiierungsmittel aus organischen Peroxiden, Hydroperoxid, Aminen, Aminosilanen, Sulfonaziden und Azoverbindungen ausgewählt ist.

8. Das Verfahren nach Anspruch 7, **dadurch gekennzeichnet, dass** das Peroxid ausgewählt ist aus Dicetylperoxid-dicarbonat, Bis(2-ethylhexyl)peroxydicarbonat, Dimyristylperoxiddicarbonat und Wasserstoffperoxid oder einer Mischung davon.

9. Das Verfahren nach einem der Ansprüche 1 bis 8, **dadurch gekennzeichnet, dass** das Polypropylen in der Form von Granalien, Pulver, Lösung, Emulsion oder Suspension vorliegt, und/oder **dadurch gekennzeichnet ist, dass** das Polymer in flüssigem Zustand, in Suspension, Emulsion, Lösung, Pulver, Partikeln oder in der Form von Granalien vorliegt, oder zusammen mit der ersten Phase synthetisiert wird.

10. Das Verfahren nach einem der Ansprüche 1 bis 9, **dadurch gekennzeichnet, dass** es einen oder mehrere Füllstoffe umfasst, ausgewählt aus modifizierten Tonen, Kieselsäuren, Fasern, Carbonaten und anderen Oberflächen-modifizierten oder -nichtmodifizierten Füllstoffen, mit organischen oder anorganischen Komponenten oder einer Mischung davon.

11. Das Verfahren nach einem der Ansprüche 1 bis 10, **dadurch gekennzeichnet, dass** die Mischung entweder kontinuierlich durch Injektion oder Extrusion oder diskontinuierlich durch Rotationsformung oder separat in einer Charge hergestellt wird, und/oder **dadurch gekennzeichnet ist, dass** das Mischen in einem kontinuierlichen Mischer oder diskontinuierlichen Mischer erfolgt, oder direkt in einem Einschneckenextruder oder Doppelschneckenextruder.

12. Das Verfahren nach einem der Ansprüche 1 bis 11, **dadurch gekennzeichnet, dass** auf das Mischen eine Extrusion/Granulation, Extrusion von Schlauchfolien oder Extrusion von Flachfolien oder Extrusion/Blasverfahren oder Extrusion/Spinnen oder Extrusion/Schäumen oder Injektion oder Extrusion von Folienbahnen folgt.

13. Das Polypropylen-Blend, hergestellt wie im Verfahren nach den Ansprüchen 1 bis 10, **dadurch gekennzeichnet, dass** die Phasen desselben morphologisch stabilisiert sind, wobei das Blend gegebenenfalls eine Schlagzähigkeit von 30 bis 1500 J/m, eine Steifigkeit von 550 bis 3200 MPa, eine Fließfähigkeit von 0,5 bis 200 g/10 Min., eine Kristallisationstemperatur von 90 bis 150 °C, eine Wärmeformbeständigkeit von 80 bis 160 °C aufweist.

14. Eine Verwendung des Polypropylen-Blends nach Anspruch 13, **dadurch gekennzeichnet, dass** es zur Herstellung eines verarbeiteten Materialprodukts dient.

15. Ein Produkt, **dadurch gekennzeichnet, dass** es ein Polypropylen-Blend nach Anspruch 13 aufweist.

## Revendications

1. Procédé de compatibilisation de mélanges de polypropylène, **caractérisé en ce qu'**il comprend le mélange d'au moins un polypropylène avec au moins un polymère, le mélange étant réalisé en présence d'un agent d'initiation de compatibilisation, dans lequel ledit agent d'initiation de compatibilisation est un composé générant des radicaux à une température inférieure à 120 °C, comprenant une demi-vie de moins de 1 heure à des températures inférieures à 70 °C, ou un agent de couplage abstracteur d'hydrogène, dans lequel le polypropylène représente une première phase du mélange et l'au moins un polymère représente une seconde phase du mélange, dans lequel la première phase du mélange et la seconde phase du mélange sont ajoutées concomitamment au mélange et un agent de compatibilisation est généré *in situ ;* et **caractérisé en outre en ce que** l'au moins un polymère est choisi dans le groupe constitué par un polyéthylène haute densité (HDPE), un polyéthylène basse densité (LDPE), un polyéthylène linéaire basse densité (LLDPE), les copolymères d'éthène-propylène, les copolymères d'éthène-butène, les copolymères d'éthène-butène, les copolymères d'éthène-octène, les copolymères de propène-butène, les copolymères d'éthène-hexène, un caoutchouc d'éthène-propylène (EPR), un caoutchouc de polyisobutylène (PIB), l'EPDM, un caoutchouc nitrile (NBR), un caoutchouc naturel (NR), un caoutchouc isoprène (IR), les caoutchoucs fluorés, les caoutchoucs chlorés, un caoutchouc butyle (BR), un caoutchouc de butène-styrène (SBR), un caoutchouc de butène-styrène thermoplastique (SBS), un caoutchouc d'éthylène-butène-styrène thermoplastique (SEBS), un caoutchouc d'éthylène-propylène-styrène thermoplastique (SEPS), un polystyrène (PS), un polytéréphtalate d'éthylène (PET), un polytéraphtalate de triméthyle (PTT), les polyesters, un polychlorure de vinylidène (PVC), un difluorure de polyvinylidène (PVDF), les copolymères d'éthylène-acétate de vinyle (EVA), les copolymères d'éthylène-alcool vinylique (EVOH), un polytéraphtalate de triméthyle, un polyamide 6 (PA6), un polyamide 66 (PA66), un polyamide 69 (PA69), un polyamide 11 (PA11), les polyamides amorphes, un polyacétal (POM) et ses copolymères, les polyanilines (PAN), les polyimides (PEK, PEEK), les polycarbonates (PC), les copolymères d'acrylonitrile-butadiène-styrène (ABS), un poly-méthacrylate de méthyle et ses copolymères (PMMA), les copolymères d'acrylonitrile (SAN), un polytéraphtalate de butyle (PBT) et leurs mélanges.

2. Procédé selon la revendication 1, **caractérisé en ce que** la compatibilisation a lieu par extrusion réactive.

3. Procédé selon l'une quelconque des revendications 1 et 2, **caractérisé en ce que** les phases du mélange sont présentes dans la même particule.

4. Procédé selon la revendication 1, **caractérisé en ce que** le polypropylène est choisi parmi un homopolymère, un copolymère statistique et un copolymère hétérophasique, et leurs mélanges.

5. Procédé selon la revendication 1, **caractérisé en ce que** le polymère est choisi parmi les caoutchoucs d'éthène avec un comonomère comprenant 4 à 8 atomes de carbone, ou un mélange de ces comonomères.

6. Procédé selon l'une quelconque des revendications 1 à 5, **caractérisé en ce que** le mélange comprend de 15% à 99,9 % d'un polypropylène et de 0,1 % à 85 % d'un polymère.

7. Procédé selon l'une quelconque des revendications 1 ou 6, **caractérisé en ce que** l'agent d'initiation de compatibilisation est choisi parmi les peroxydes organiques, un hydroperoxyde, les amines, les amino-silanes, les sulfonazides et les composés azo.

8. Procédé selon la revendication 7, **caractérisé en ce que** le peroxyde est choisi parmi le peroxy-dicarbonate de dicétyle, le peroxydicarbonate de bis(2-éthyl-hexyle), le peroxydicarbonate de dimyristyle et le peroxyde d'hydrogène ou un mélange de ceux-ci.

9. Procédé selon l'une quelconque des revendications 1 à 8, **caractérisé en ce que** le polypropylène est sous la forme de granulés, d'une poudre, d'une solution, d'une émulsion ou d'une suspension, et/ou **caractérisé en ce que** le polymère est dans un état liquide, en suspension, en émulsion, en solution, une poudre, des particules ou sous la forme de granulés, ou est synthétisé conjointement avec la première phase.

10. Procédé selon l'une quelconque des revendications 1 à 9, **caractérisé en ce qu'**il comprend une ou plusieurs charges choisies parmi les argiles modifiées, les silices, les fibres, les carbonates et les autres charges à surface modifiée ou non modifiée, avec des composés organiques ou inorganiques ou un mélange de ceux-ci.

11. Procédé selon l'une quelconque des revendications 1 à 10, **caractérisé en ce que** le mélange est préparé de manière continue par injection ou extrusion, ou de manière discontinue par moulage rotationnel ou séparément en lot, et/ou **caractérisé en ce que** le mélange est réalisé dans un mélangeur continu ou un mélangeur discontinu, ou directement dans une machine d'extrusion monovis ou une machine d'extrusion à double vis.

12. Procédé selon l'une quelconque des revendications 1 à 11, **caractérisé en ce que** le mélange est suivi d'une extrusion/granulation, d'une extrusion de films tubulaires ou d'une extrusion de films plats ou d'une extrusion/soufflage ou d'une extrusion/centrifugation ou d'une extrusion/expansion ou d'une injection ou d'une extrusion de feuilles.

13. Mélange de polypropylène préparé comme dans le procédé selon les revendications 1 à 10, **caractérisé en ce que** ses phases sont morphologiquement stabilisées, dans lequel le mélange présente facultativement une résistance aux chocs de 30 à 1500 J/m, une rigidité de 550 à 3200 MPa, une aptitude à l'écoulement de 0,5 à 200 g/10 minutes, une température de cristallisation de 90 à 150 °C, une température de déformation à la chaleur de 80 à 160 °C.

14. Utilisation du mélange de polypropylène selon la revendication 13, **caractérisée en ce qu'**il est destiné à la production d'un produit de type matériau transformé.

15. Produit **caractérisé en ce qu'**il comprend un mélange de polypropylène selon la revendication 13.
